# EUROPÄISCHE PATENTANMELDUNG

(11) **EP 1 293 432 A1**
(43) Veröffentlichungstag der Anmeldung: **19.03.2003**
(21) Anmeldenummer: 02017426.4
(22) Anmeldetag: 03.08.2002
(51) Int. Cl.: B65B 21/06, B65B 35/54, B65G 47/244, B65G 47/68

(54) **Drehstation für Gebinde**

(30) Priorität: 14.09.2001 DE 10145543
(71) Anmelder: KHS Maschinen- und Anlagenbau Aktiengesellschaft, 44143 Dortmund (DE)
(72) Erfinder: Purper, Gunther, 55593 Rüdesheim (DE); Baumann, Michael, 83607 Holzkirchen (DE)

(57) **Zusammenfassung**

Die Erfindung bezieht sich auf eine Drehstation für eine Vorrichtung zur Herstellung palettierfähiger Lagen von Gebinden, Stückgütern und dergleichen und zeichnet sich dadurch aus, daß die Drehstation (4) aus mehreren nebeneinander befindlichen einzelnen Drehstationen (4') gebildet ist, die ihrerseits aus mindestens zwei nebeneinander verlaufenden Linearbändern (5,6) bestehen, wobei die Linearbänder (5,6) mit gleichen und/oder beliebig unterschiedlichen Geschwindigkeiten relativ zueinander antreibbar sind und mindestens ein Linearband in seiner Aufnahmeebene quer zur Bewegungsrichtung geneigt verläuft.

## Beschreibung

Die Erfindung betrifft eine Vorrichtung zur Herstellung palettierfähiger Lagen von Gebinden, Stückgütern und dergleichen nach Anspruch 1.

Derartige Verkaufsverpackungen bzw. Gebinde bestehen beispielsweise aus in ein, zwei oder mehr Reihen nebeneinander angeordneten Behältern, wobei in jedem Gebinde vier, sechs, acht, oder mehr Behälter zusammengefaßt sind. Diese Gebinde sind in Folie eingeschlagen und eingeschrumpft oder aber in Kartons verpackt. Solche Gebinde sollen ohne zusätzliche Versandverpackungen palettiert werden. Hierzu ist es erforderlich, die einzelnen Gebinde vor dem eigentlichen Palettieren der Palettierstation in der vorgesehenen Anordnung zuzuführen. Das geschieht unter anderem dadurch, daß vorab mehrere Verkaufsverpackungen zu größeren Gebinden auf einem Tray und/oder nur in Folie zusammengefaßt werden, wonach dann diese zusammengefaßten Gebinde der Palettierstation zugeführt werden. Das hat seinen Grund darin, daß die bisher benutzten Verteil- und Ausrichtsysteme recht langsam arbeiten, da sie rein mechanisch gesteuert werden. Zum Ausrichten der Gebinde stehen fest eingestellte diskrete Transportlinien zur Verfügung, auf denen die Gebinde ausgerichtet und zur Palettierstation transportiert werden. Bei einem Wechsel von einer Gebindegröße auf eine andere müssen konstruktive Maßnahmen getroffen werden, um die Transportlinien auf die neue Größe umzustellen.

Um die Palettierfläche optimal ausnutzen zu können, ist es mitunter erforderlich, daß die Einzelgebinde nicht allein in einer Richtung orientiert sind, sondern eine um 90°C gedrehte Orientierung aufweisen. Nur so ist es bei bestimmten Packungsgrößen und -formen möglich, die Palettierfläche ohne unnötige Lücken zwischen den Gebinden auszunutzen.

Der Erfindung liegt daher die Aufgabe zugrunde, eine Vorrichtung der eingangs genannten Art so auszugestalten, daß die Geschwindigkeit des Dreh- und Ausrichtvorgangs erhöht wird, der Zwischenschritt der Zusammenfassung von Einzelgebinden zu größeren Gebinden entfallen kann und die Umstellung der Drehvorrichtung von einer Packungsgröße zur anderen schnell und auf einfache Weise erfolgen kann.

Mit Hilfe dieser Vorrichtung ist es möglich, mehrere Einzelgebinde nebeneinander in kontinuierlicher Folge in einer relativ kurzen Förderstrecke zu drehen. In der der Drehstation nachgeschalteten Sammelstation werden dann die so ausgerichteten Einzelgebinde im gewünschten Palettiermuster zusammengefaßt. Von hier wird die so zusammengestellte palettierfähige Lage mittels bekannter Einrichtungen auf Paletten gesetzt.

Es ist ferner vorgesehen, daß die seitliche Auslaufposition der Gebinde im Endbereich der Verteil- und Ausrichtstation in Bezug auf eine mittige Position der jeweiligen Drehstation einstellbar ist, also die Zuführspur für die Gebinde auf die entsprechend zugeordnete Einzeldrehstation einstellbar ist.

Auf diese Weise ist sichergestellt, daß die Anlage auf einfache Art, beispielsweise durch Synchronantriebe oder dergl., leicht auf unterschiedliche Gebindearten umgestellt werden kann. Komplizierte manuelle Verstellungen entfallen. Es ist vorgesehen, die unterschiedlichen Einstellungen speicher- und abrufbar auszuführen. Auf diese Weise können durch Eingabe der Gebindeart alle erforderlichen Einstellungen an der gesamten Drehvorrichtung vorgenommen werden.

Die Erfindung wird im folgenden anhand von Zeichnungen dargestellt und näher erläutert.

Es zeigen:
- Fig. 1: eine Drehstation im Querschnitt,
- Fig. 2: eine Drehstation in perspektivischer Darstellung,
- Fig. 3: in Draufsicht und systematischer Darstellung eine Verteil- und Ausrichtvorrichtung und
- Fig. 4: in Draufsicht eine Kurvenführung für die Tragplatten der einzelnen Gebinde.

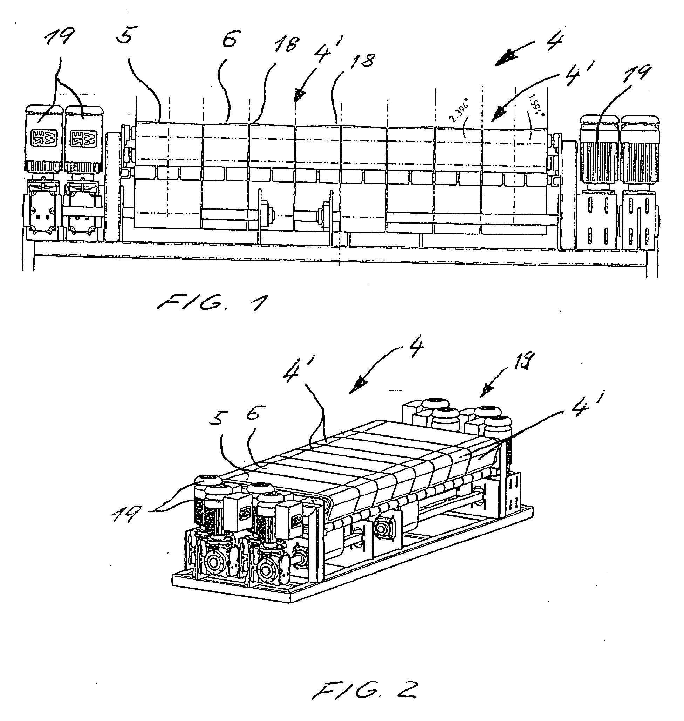

Gemäß dem in den Figuren 1 und 2 dargestellten Ausführungsbeispielen besteht die Drehstation 4 aus mehreren nebeneinander befindlichen einzelnen Drehstationen 4', die ihrerseits aus mindestens zwei nebeneinander verlaufenden Linearbändern 5,6 bestehen. Diese Linearbänder 5,6 sind jeweils von separat ansteuerbaren Motoren 19 angetrieben und können mit beliebig gleichen und/oder beliebig unterschiedlichen Geschwindigkeiten relativ zueinander betrieben werden. Es ist aber auch denkbar, drei oder mehrere nebeneinander verlaufende Linearbänder 5,6 für jeweils eine Drehstation 4' vorzusehen, wobei beispielsweise bei einer dreibahnigen Ausführung das mittlere Band im Querschnitt gesehen in einer geraden Ebene verläuft und die jeweils außenliegenden Bänder von dieser Ebene nach außen hin ansteigen. Bei zwei nebeneinander befindlichen Linearbändern 5,6 in einer Drehstation 4' sind diese zweckmäßig gegeneinander geneigt, um mit ihren hochstehenden Seiten 18 eine optimale Angriffsfläche für zu drehende Gebinde zu bilden. Es ist dabei auch denkbar, die Bänder 5,6 jeweils mit unterschiedlichen Neigungen auszubilden, wobei das eine zu einer weiteren Drehstation 4' weisende Band einen größeren Neigungswinkel aufweist als beispielsweise ein außenliegendes Linearband oder umgekehrt.

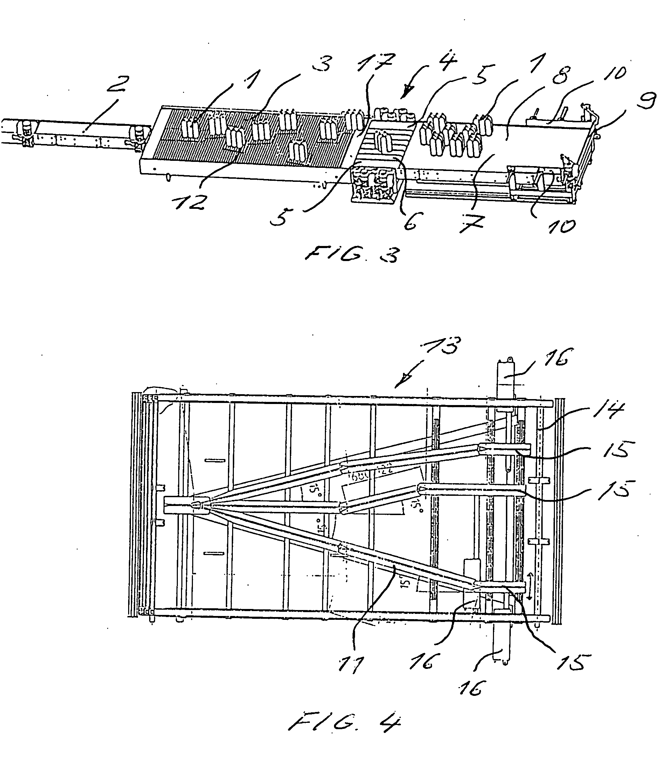

Fig. 3 zeigt eine Vorrichtung, in der eine solche Drehvorrichtung eingegliedert ist. Gemäß dem Ausführungsbeispiel besteht eine solche Vorrichtung zur Herstellung palettierfähiger Lagen von Gebinden 1 aus einer als Transporteur ausgebildeten Zuführeinrichtung 2, auf der die Gebinde 1 ein- oder mehrspurig zugeleitet werden können. Im Anschluß an die Zuführeinrichtung 2 befindet sich die eigentliche Verteil- und Ausrichtstation 3, auf der die Gebinde 1 seitlich versetzt zueinander ausgerichtet werden, wobei die seitliche Ausrichtung derart erfolgt, daß die Gebinde 1 jeweils mittig einer nachfolgenden Liniear-Dreh- und Ausrichtstation 4 zugeführt werden. Diese besteht beispielsweise aus jeweils mindestens zwei nebeneinander befindlichen Transportbändern 5, 6, die mit unterschiedlichen Geschwindigkeiten angetrieben werden können und auf diese Art und Weise eine Drehung der jeweils zugeführten Gebinde verursacht. Die einzelnen Bänder 5, 6 sind, wie ausgeführt, mit gleichen oder unterschiedlichen Geschwindigkeiten antreibbar, so daß die Gebinde, sofern für das jeweils vorgegebene Lagenbild gewünscht, geradeaus durch die Linear-Drehund Ausrichtstation 4 geleitet werden können. Bei einer erforderlichen Drehung der einlaufenden Gebinde 1 werden in die nebeneinander befindlichen Linearbänder 5, 6 mit jeweils unterschiedlichen Geschwindigkeiten angetrieben, so daß eine unverzügliche und relativ schnelle Drehung auf einem äußerst kurzen Transportabschnitt durchgeführt werden kann. Die so je nach dem gewünschten Lagebild erstellten bzw. ausgerichteten Gebinde 1 gelangen dann zu der eigentlichen Sammelstation 7, deren Transportebene 8 die Gebinde 1 in Form und Anzahl für die zu bildende Stückgutlage aufnimmt. Sobald das letzte Gebinde zur Vervollständigung dieser kompletten Lage auf der Transportebene 8 der Sammelstation angelangt ist, wird diese kurzfristig beschleunigt, um zu den nachfolgenden Gebinden einer weiteren Lage einen gewissen Abstand zu bilden, der ausreicht, um eine mitverfahrbare Zentriervorrichtung 9 hinter die Lage zu bringen. Mittels dieser mitfahrbaren Zentriervorrichtung 9 wird die Lage mindestens dreiseitig zentriert. Die Zentrierbleche oder Zentrierleisten 10 können vorzugsweise pneumatisch in die Ebene der Sammelstation 7 hineinbewegt werden. Im Anschluß darauf wird die komplette Lage zur Palettierung umgesetzt.

Figur 4 zeigt in Draufsicht eine Kurvenführung 11 für die Tragplatten 12 der einzelnen Gebinde 1, aufgenommen in einem Maschinengerüst 13 mit den einzelnen Antriebseinrichtungen 14. Es wurde bereits ausgeführt, daß die Auslaufposition der Gebinde 1 im Endbereich der Verteil- und Ausrichtstation 3 in Bezug auf eine mittige Position der jeweiligen zugeordneten Drehstation 4 erforderlich ist. Zu diesem Zwekke sind die Führungsbahnen bzw. -kurven 15 jeder Tragplatte 12 in ihrer Querposition, also quer zur eigentlichen Förderrichtung der Gebinde 1 einstellbar und verstellbar ausgeführt. Hierzu sind Stellmotoren 16 vorgesehen, die eine Verschiebung des Endbereiches der Führungskurven 15 je nach der gefahrenen Gebindeart oder deren Größe automatisch vollziehen können. Damit ist dann gewährleistet, daß die auf den Tragplatten 12 befindlichen Gebinde 1 jeweils exakt zur zugeordneten nachfolgenden Drehstation bzw. deren Linearbändern ausgerichtet sind. Um die jeweiligen Gebinde, die zu einer Lage erforderlich sind, nach Vervollständigung einer Lager abstandsmäßig kurzfristig zu trennen, kann zwischen der Verteil- und Ausrichtstation 3 zusätzlich eine Verzögerungseinrichtung 17 angeordnet sein. Andererseits ist es ferner möglich, die auf der Sammelstation 7 befindliche Lage bzw. die Transportebene 8 dieser Sammelstation 7 nach Übernahme des letztes Gebindes einer Lage kurzfristig zu beschleunigen, wodurch ebenfalls der erforderliche bzw. gewünschte Abstand von Lage zu Lage gewährleistet ist. Die mitlaufenden Zentrierelemente 10 der Zentriervorrichtung 9 oberhalb der Anlagensammelstation richten die eingelaufene Gebindeformation zweckmäßig während der Fortbewegung kontinuierlich zu einer Lage aus.

## Patentansprüche

1. Drehstation für eine Vorrichtung zur Herstellung palettierfähiger Lagen von Gebinden, Stückgütern und dergleichen, ***dadurch gekennzeichnet, daß*** die Drehstation (4) aus mehreren nebeneinander befindlichen einzelnen Drehstationen (4') gebildet ist, die ihrerseits aus mindestens zwei nebeneinander verlaufenden Linearbändern (5,6) bestehen, wobei die Linearbänder (5,6) mit gleichen und/oder beliebig unterschiedlichen Geschwindigkeiten relativ zueinander antreibbar sind und mindestens ein Linearband in seiner Aufnahmeebene quer zur Bewegungsrichtung geneigt verläuft.

2. Drehstation nach Anspruch 1, ***dadurch gekennzeichnet, daß*** die Linearbänder (5,6) in ihrer Aufnahmeebene zueinander geneigt verlaufen.

3. Drehstation nach den vorhergehenden Ansprüchen, ***dadurch gekennzeichnet, daß*** die Neigung der Linearbänder (5,6) zueinander jeweils eine fallende ist.

4. Drehstation nach den vorhergehenden Ansprüchen, ***dadurch gekennzeichnet, daß*** bei mehreren parallelen Linearbändern (5,6) ein mittig angeordnetes Linearband und jeweils ansteigende äußere Linearbänder vorgesehen sind.

5. Drehstation nach den vorhergehenden Ansprüchen, ***dadurch gekennzeichnet, daß*** die Ansteuerung der Antriebe (19) in Bezug auf das vorgegebene Lagenbild automatisch erfolgt.

6. Drehstation nach dem Oberbegriff des Anspruchs 1 mit einer vorgeschalteten Verteil- und Ausrichtstation, ***dadurch gekennzeichnet, daß*** die Zuführspur für die Gebinde (1) auf die entsprechend zugeordnete Einzeldrehstation (4') einstellbar ist.

7. Drehstation in einer Vorrichtung zur Herstellung palettierfähiger Lagen von zu Gebinden zusammengefaßten Produkten wie Flaschen, Dosen und dergleichen, bestehend aus einer Zuführeinrichtung, einer dieser nachgeordneten Verteil- und Ausrichtstation zur lagenspezifischen Ausrichtung der Gebinde und einer der Verteil- und Ausrichtstation nachgeordneten Sammelstation, ***dadurch gekennzeichnet, daß*** die Gebinde (1) mindestens einspurig einer Verteil- und Ausrichtsstation zugeleitet und in dieser mittig zu den Linearbändern (5,6) einer nachfolgenden Lineardreh- und Ausrichtstation (4) ausgerichtet zugeführt und in dieser entsprechend dem vorgegebenen Lagebild gedreht und/oder ausgerichtet und der Sammelstation (7) zugeleitet werden, worauf nach Übernahme der in einer Lage gewünschten Gebinde (1) die Transportebene (8) der Sammelstation (7) mit den noch lose ungeordneten Gebinden kurzzeitig beschleunigt und darauf mittels einer mitfahrbaren Zentriervorrichtung (9) zu einer Lage zentriert werden.

8. Vorrichtung gemäß Oberbegriff des Anspruchs 7, ***dadurch gekennzeichnet, daß*** die zulaufenden Gebinde (1) zunächst seitlich ausgerichtet und in dieser Position einer Drehstation (4) zugeleitet werden, in welcher je nach vorgesehenem Lagebild eine Drehung oder ein Geradeauslauf eingeleitet und das Gebinde (1) dem Lagenvorbereitungstisch (7) zugeführt und von mitlaufenden Zentrierelementen (9) zu einer Lage zusammengefügt wird.

9. Vorrichtung gemäß Oberbegriff des Anspruchs 7, ***dadurch gekennzeichnet, daß*** die seitliche Auslaufposition der Gebinde (1) im Endbereich der Verteil- und Ausrichtstation (3) in Bezug auf eine mittige Position der jeweiligen zugeordneten Drehstation (4) einstellbar ist.

10. Vorrichtung nach den vorhergehenden Ansprüchen, ***dadurch gekennzeichnet, daß*** die seitliche Auslaufposition der Gebinde (1) durch seitliche Verstellung der Führungskurven (15) jeder Tragplatte (12) einstellbar ist.

11. Vorrichtung nach vorhergehenden Ansprüchen, ***dadurch gekennzeichnet, daß*** zwischen der Verteil- und Ausrichtstation (3) und der Drehstation (4) eine Verzögerungseinrichtung (17) angeordnet ist.

12. Vorrichtung nach den vorhergehenden Ansprüchen, ***dadurch gekennzeichnet, daß*** die Transportebene (8) des Lagenvorbereitungstisches (7) nach Übernahme einer kompletten Lage mindestens kurzfristig beschleunigbar ist.

13. Vorrichtung nach den vorhergehenden Ansprüchen mit über dem Lagenvorbereitungstisch bewegbaren Zentrierelementen, ***dadurch gekennzeichnet, daß*** die Zentrierelemente (10) die eingelaufene Gebindeformation während der Fortbewegung kontinuierlich zu einer Lage formieren.
